# FASCICULE DE BREVET EUROPEEN

(11) **EP 3 934 432 B1**
(45) Date de publication et mention de la délivrance du brevet: **15.11.2023**
(21) Numéro de dépôt: 20707678.7
(22) Date de dépôt: 09.03.2020
(51) Int. Cl.: A21C 9/06, A21C 14/00, A21C 15/00, A23P 20/20, A47J 27/16

(54) **RAMOLLISSEUR POUR LA FABRICATION D'ALIMENTS COMPORTANT UNE ENVELOPPE FABRIQUÉE À BASE DE RIZ**
WEICHMACHER FÜR DIE HERSTELLUNG VON LEBENSMITTELN MIT REISPAPIER
SOFTENER FOR THE FABRICATION OF FOODS WITH A RICE ENVELOPE

(30) Priorité: 08.03.2019 FR 1902370
(43) Date de publication de la demande: 12.01.2022
(73) Titulaire: Bretinov, 29910 Tregunc (FR)
(72) Inventeur: AUFFRET, Pierre, 29930 PONT AVEN (FR)
(74) Mandataire: Novagraaf Technologies
(86) Numéro de dépôt international: PCT/EP2020/056141
(87) Numéro de publication internationale: WO 2020/182703

(56) Documents cités:
- JP-A- H0 199 515
- JP-A- S5 917 954
- JP-A- H06 343 396
- JP-A- S56 161 023
- JP-A- 2008 142 259
- Bretinov: "Machines spéciales pour l'agrolimentaire", , 7 septembre 2018 (2018-09-07), XP055635276, Extrait de l'Internet: URL:http://bretinov.bzh/wp-content/uploads /2018/07/Catalogue-Bretinov-2019-web.pdf [extrait le 2019-10-23]

## Description

La présente invention est du domaine des lignes de fabrication d'aliments tout préparés, et concerne plus particulièrement, mais non exclusivement, la fabrication des aliments intégrant une galette de riz et vise tout particulièrement la préparation des nems ou des rouleaux de printemps.

La fabrication mécanisée des aliments à partir de galettes de riz comporte plusieurs contraintes :
- les galettes de riz doivent être ramollies pour pourvoir conformer les produits dans leur forme finale ;
- la farce doit être déposée sur la ligne de fabrication ;
- en outre, différentes opérations de pliage et de roulage sont nécessaires pour parvenir au produit fini destiné à l'assiette du consommateur.
Toutes ces opérations compliquent l'automatisation des tâches réalisées au cours de la fabrication. De plus, outre la difficulté d'automatiser certaines tâches, il reste impératif de pouvoir garantir des cadences de production élevées avec très peu de pertes, à la fois sur la matière première et aussi sur les aliments obtenus.

Le ramollissement des galettes de riz est une étape impérative qui doit être réalisée en vue de pouvoir plier les galettes, lesquelles galettes sont rigides et ne peuvent pas être déformées sans les casser, voire les émietter. Il est connu de recourir au ramollisement des galettes de riz par une simple humectation sans recourir à l'usage d'un outil dédié. Dans ce cadre, un opérateur humecte les galettes une à une, comme cela est suggéré dans les demandes FR 2 685 167 et FR 2 546 734. Cette étape est particulièrement laborieuse, et, le contrôle du bon ramollissement des galettes est difficile à maîtriser de cette façon.

La demande FR 2 622 407 décrit un projecteur de vapeur en vue d'humecter des galettes de riz à l'état sec. La projection de la vapeur se fait par le dessus des galettes à l'aide d'un container comportant un fond troué qui projette de la vapeur. Une telle vaporisation ne permet pas de contrôler la pression et la température de la vapeur qui parvient jusqu'à la surface des galettes de riz.

Aussi JP2008142259 A divulgue un ramollisseur selon l'état de la technique.

Pour pallier tout ou partie des inconvénients de l'état de la technique précité, la présente invention concerne un dispositif pour le ramollissement des galettes de riz, également qualifié de ramollisseur, le dispositif comprenant une enceinte pour l'humidification de galettes de riz qui comprend :
- un banc d'humidification comportant au moins un moyen support prévu pour le défilement d'un tapis convoyage, ledit banc comporte une concavité, dénommée gouttière, qui s'étire axialement suivant un axe longitudinal « XX' » et une unité de distribution de vapeur contenant au moins une buse vapeur dont la bouche d'évacuation débouche dans la lumière de ladite gouttière ; et
- un capot qui s'étire axialement suivant un axe « YY' » parallèle à l'axe « XX' >>;
et dans lequel le ramollisseur selon l'invention comporte un tapis de convoyage comportant une nappe textile dont les bordures coopèrent avec le moyen support et la nappe textile est une toile tissée avec une maille de 0,8 à 1,2 mm et un fil de 0,45 à 0,55 mm d'épaisseur; les bouches d'évacuation des buses vapeur étant distantes de 1 à 5 mm de la nappe textile.

Une telle configuration du ramollisseur selon l'invention permet d'obtenir un ramollissement au plus près du tapis de convoyage, sans dispersion de la vapeur, car cette vapeur reste bien confinée dans l'enceinte. Ainsi une telle configuration permet d'ajuster finement la pression, la température, et le temps d'application de la vapeur sur les galettes pour obtenir un ramollissement suffisant pour bien plier les galettes sans les casser, tout en éviter que celle-ci restent collées au tapis de convoyage. La ou les buse(s) vapeur comportent au moins une sortie pour la vapeur dénommée « bouche d'évacuation ».

Dans le cadre de l'invention le terme « sens de défilement » correspond au sens de défilement des galettes sur un tapis de convoyage qui doit convoyer les galettes au dessus du banc d'humidification du ramolisseur selon l'invention.

L'invention est avantageusement mise en oeuvre selon les modes de réalisation et les variantes exposés ci-après, lesquelles sont à considérer individuellement ou selon toute combinaison techniquement opérante.

Avantageusement, les moyens support consistent en un ensemble de deux rails qui jouxtent de part et d'autre les bordures de la gouttière en s'étendant sensiblement sur toute sa longueur. Ces rails permettent de guider le tapis de convoyage destiné à supporter les galettes de riz.

Le ramollisseur selon l'invention comporte un tapis de convoyage comportant une nappe textile dont les bordures coopèrent avec le moyen support. La nappe textile est par exemple composée de fibres naturelles ou artificielles tissées, tricotées ou encollées (associées entre elles par un liant), il peut s'agir par exemple d'une nappe composée d'un filet plastique à maillage resserré. La susdite nappe textile est une toile tissée avec une maille de 0,8 à 1,2 mm et un fil de 0,45 à 0.55 mm d'épaisseur. Une telle nappe textile permet le passage de la vapeur d'eau entre les fibres, et permet de pulvériser la vapeur d'eau par le dessous au plus près des galettes de riz qui défilent sur le convoyeur.

Selon l'invention, les bouches d'évacuation des buses vapeur sont distantes de 1 à 5 mm de la nappe textile du tapis de convoyage ; de préférence, la distance entre la nappe textile le tapis de convoyage est inférieure ou égale à 3 mm. Cette configuration permet de projeter la vapeur d'eau à une température de 95 et 103°C, de préférence de 98 et 100°C directement au contact des galettes.

Avantageusement, l'unité de distribution de vapeur intègre une soupape d'admission de la vapeur d'eau et une canalisation de sortie raccordée, d'une part, à ladite soupape d'admission et, d'autre part, à la susdite ou aux susdites buses vapeur.

La soupape d'admission permet de choisir la pression de la vapeur et de pouvoir régler le dispositif de sorte à obtenir une vapeur d'eau à la température et à la pression voulue sous le tapis de convoyage. La soupape permet d'évacuer la vapeur lorsque la pression de celle-ci est atteinte, de préférence de 1 à 3 bars, voire 1.5 à 2,5 bars. La vapeur sous pression dans cette plage de valeur de pression, est évacuée jusqu'à l'extrémité des buses vapeur où elle s'échappe à une température de 98 à 100°C, qui est la plage de valeur idéale pour humecter les galettes de riz sans qu'elles ne collent au tapis. La soupape d'admission intègre un ressort de rappel qui est taré de sorte à ce qu'il ait une dureté suffisante pour permettre une sortie de vapeur constante.

Avantageusement, les buses vapeur sont montées pivotantes sur la canalisation de sortie. De la sorte, les buses vapeur sont orientables sous le tapis de convoyage pour pouvoir diffuser la vapeur sur une largeur prédéfinie dudit tapis. Les buses vapeur sont conformées avantageusement comme des pinceaux s'évasant sensiblement sur un plan et dont l'extrémité est ajourée par des orifices régulièrement espacés sur toute la bordure distale de la buse.

Avantageusement, la canalisation de sortie de l'unité de distribution de vapeur est positionnée sur le fond de la gouttière, de préférence sur sa convexité, et, l'unité de distribution comprend dix à vingt buses vapeur montées sur ladite canalisation de sortie en étant régulièrement espacées. Il est également possible de retirer des buses vapeur en créant des espaces supplémentaires où la vapeur n'est plus distribuée, pour contrôler l'humectation avec d'avantage de précision.

Avantageusement, le banc d'humectation comprend un chauffe-eau positionné le long des parois de la gouttière et raccordé à l'unité de distribution de vapeur d'eau. Ainsi, le ramollisseur est capable de produire sa propre vapeur d'eau sous pression directement sous la galette, avec un minimum de tuyauterie : les déperditions de chaleur sont évitées et une économie d'énergie conséquente est de ce fait réalisée.

Avantageusement, le capot est relevable pour passer d'une position basculée dans laquelle le capot coiffe le susdit banc d'humidification, à une position relevée dans laquelle le capot libère l'accès à l'intérieur de la gouttière du banc d'humidification. Un tel capot permet de procéder au ramollissement des galettes de manière confinée, et, de pouvoir accéder aux différents éléments intégrés dans la concavité du banc pour régler la distribution de la vapeur d'eau et/ou pour procéder à la maintenance, ou au nettoyage, de l'intérieur de l'enceinte du ramollisseur.

Avantageusement, le ramollisseur comprend un système de pulvérisation d'eau positionné en amont du banc d'humidification, ledit système de pulvérisation d'eau comportant : une unité de commande, un détecteur de galette relié à l'unité de commande, et deux buses d'entrée branchées sur l'unité de commande qui sont adaptées pour pulvériser de l'eau de manière séquentielle. La séquence d'ouverture et de fermeture des buses d'entrée est programmable entre 20 et 50 Hz, avec une amplitude de l'ouverture de 10 à 100% (séquences d'ouverture et de fermeture des buses d'entrée : onde à signal carré). Une galette de riz a une épaisseur variant de 0.1 à 0.2 mm et doit recevoir une quantité d'eau pas trop importante, pour éviter que le nem explose pendant la friture ; mais cette quantité d'eau doit être suffisante pour que le roulage ou le pliage de la galette soient facile et qu'elle ne colle pas sur le tapis de convoyage. Le système de pulvérisation selon l'invention permet une absorption d'eau efficace, suffisante pour préparer la galette en vue de son passage sur le banc d'humidification et sans gaspiller d'eau grâce au détecteur de galette. Grâce au ramollisseur équipé d'un tel système, il est possible d'avoir un débit d'uniquement 5 à 15 litres d'eau par heure.

Le ramollisseur comporte avantageusement une cheminée d'évacuation de la vapeur placée en amont, eu égard au sens de défilement du tapis, de l'enceinte pour l'humidification des galettes.

Le ramollisseur comporte avantageusement des buses de nettoyage placées à la sortie par rapport au sens de défilement du tapis de convoyage du banc d'humectation. De telles buses de nettoyage sont de préférence de taille plus réduite (plus fines) que les buses raccordées à la susdite canalisation de sortie et assurent le lavage du tapis pour retirer les éventuels morceaux de galettes qui peuvent être restés collés.

D'autres avantages, buts et caractéristiques de la présente invention ressortent de la description qui suit faite, dans un but explicatif et nullement limitatif, en regard des dessins annexés, dans lesquels :
[Fig. 1] la figure 1 représente une vue de côté d'un ramollisseur selon l'invention en configuration d'utilisation ;

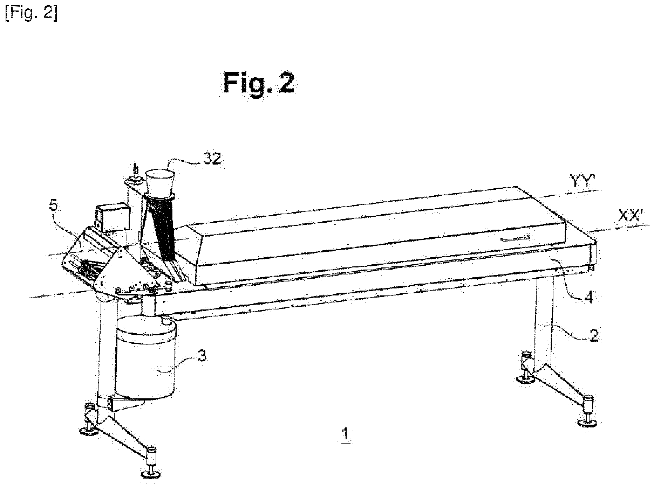

[Fig. 2] la figure 2 représente une vue en perspective d'un ramollisseur selon l'invention en configuration d'utilisation ;

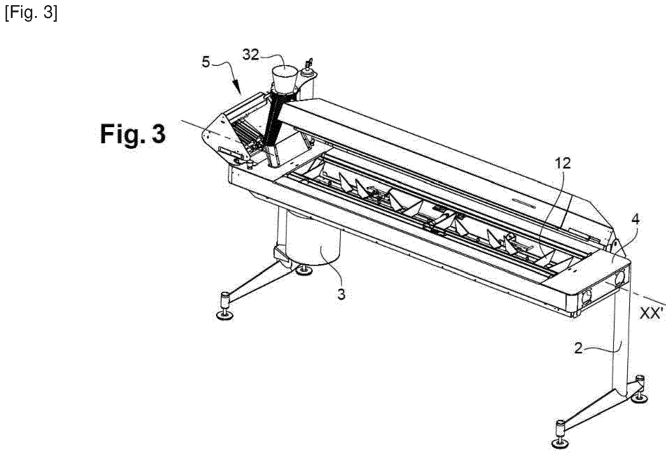

[Fig. 3 et 4] la figure 3 et 4 représente une vue en perspective du même dispositif avec le capot relevé pour pouvoir visualiser l'intérieur du banc d'humidification ;
[Fig. 5] la figure 5 représente une vue en perspective du système de pulvérisation d'eau du ramollisseur représenté au figure 1 à 4, placé en amont ;
[Fig. 6] la figure 6 représente une vue en perspective du chauffe-eau branché sur l'unité de distribution de vapeur du ramollisseur représenté au figure 1 à 4 ;
[Fig. 7] la figure 7 représente une vue en coupe du ramollisseur selon le plan AA' montré à la figure 6 montrant en détail l'intérieur de la soupape d'admission et son raccordement au chauffe-eau par le dessous de la gouttière, et au tube longitudinal ;
[Fig. 8] la figure 8 représente une vue en coupe du ramollisseur selon le plan BB' montré à la figure 6 montrant en détail l'intérieur d'une buse vapeur et son raccordement au tube longitudinal ;
[Fig. 9] la figure 9 représente une vue en éclaté du chauffe-eau du même mode de réalisation du ramollisseur selon l'invention ;
[Fig. 10] la figure 10 représente une vue en éclaté de la gouttière et des rails, et leur agencement par rapport à l'unité de distribution de vapeur et des buses pour le même mode de réalisation du ramollisseur selon l'invention ;

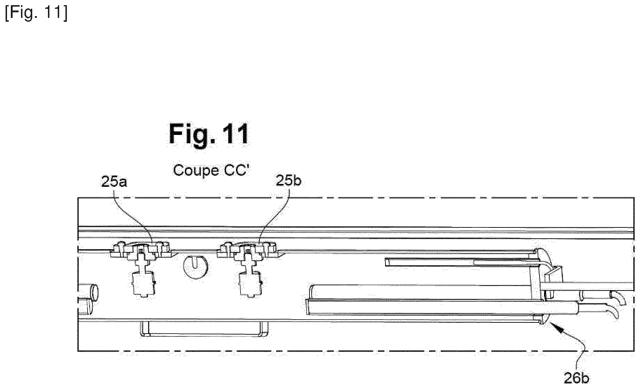

[Fig. 11] la figure 11 représente une vue en coupe du chauffe-eau montré à la figure 9.

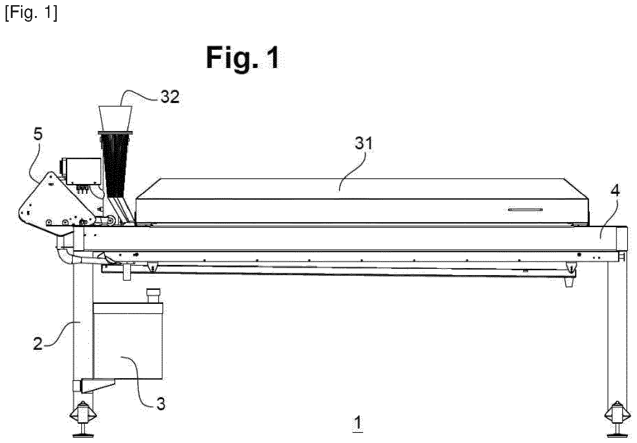

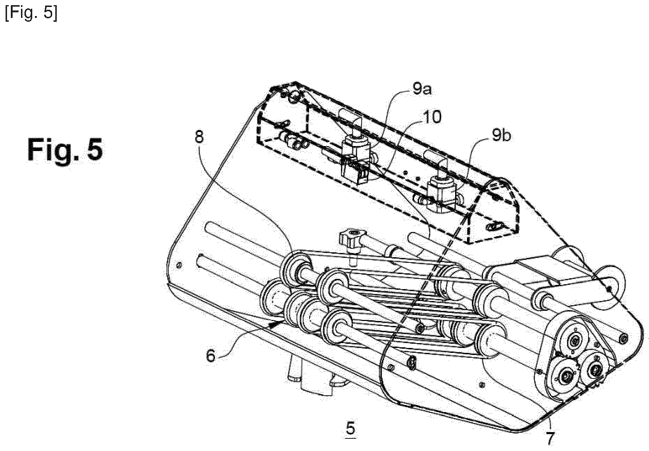

La figure 1 montre le ramollisseur 1 pour le ramollissement de galette de riz selon un mode de réalisation de l'invention intégrant un châssis comprenant deux pieds 2 réglables en hauteur. Le châssis supporte un système de soufflerie 3 et le ramollisseur comporte un banc d'humidification 4, supporté par le châssis et qui s'étend suivant un axe longitudinal « XX' ». Le système de soufflerie 3 sert à éliminer l'humidité en excès au niveau du banc d'humidification 4 pour éviter que les galettes à convoyer ne deviennent trop collantes et difficiles à décoller du ramollisseur 1. Le ramollisseur comprend également un système de pulvérisation d'eau 5 (figure 5) placé en amont - tenant compte du sens de défilement des galettes - du banc d'humidification 4. Le système de pulvérisation d'eau 5 est montré sur la figure 5, il comporte des convoyeurs à bandes 6 intégrant des courroies 7 et des galets 8 montés sur les courroies 7, pour le convoyage des galettes de riz. Le système de pulvérisation d'eau 5 comprend deux buses d'entrée 9a et 9b pulvérisant de l'eau sous pression de manière séquentielle à une fréquence de 20 Hz (hertz), avec une séquence d'ouverture et de fermeture, tel que pendant 33% du temps sur une période les buses sont ouvertes à 100%, et 67% du temps de la même période les buses sont ouvertes à 1%. Les buses d'entrées sont commandées par une unité de commande qui pilote leur déclenchement en fonction de données intégrées par un détecteur de galette 10, qui est un capteur optique, contenu dans le système de pulvérisation et positionné entre les deux buses d'entrées 9a et 9b.

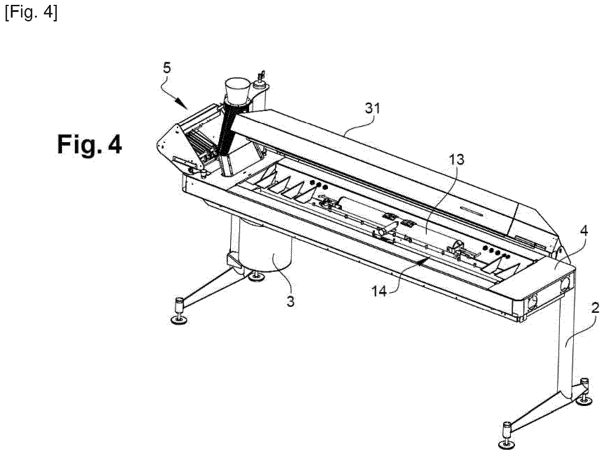

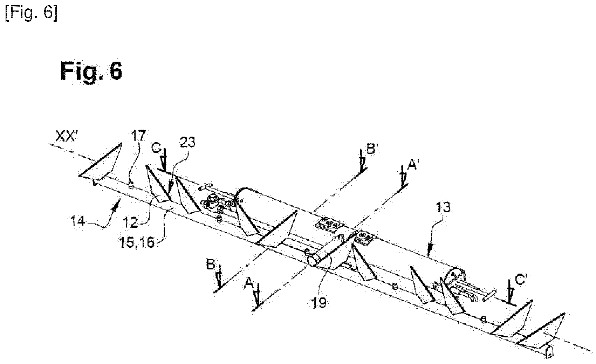

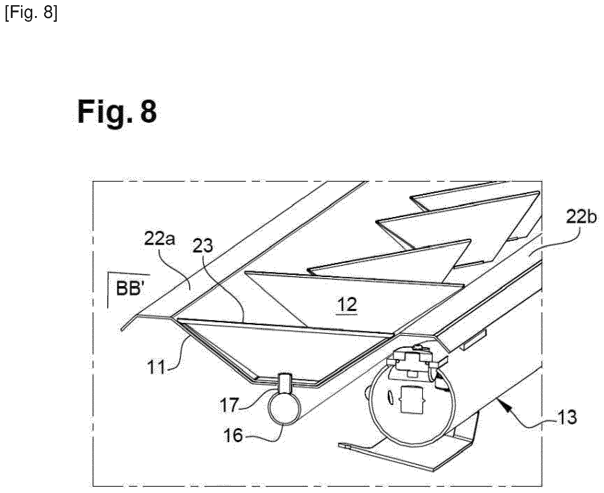

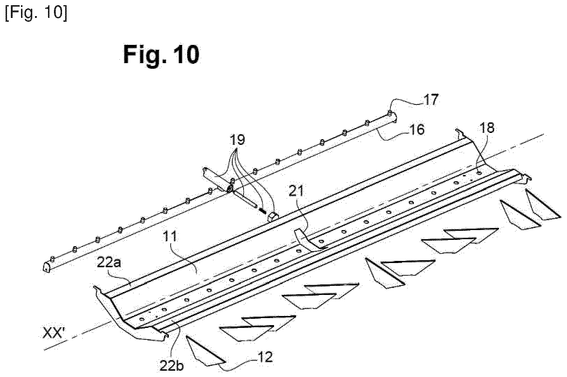

Le banc d'humidification 4 comporte une gouttière 11 traversée par l'axe longitudinal « XX' ». Un ensemble de seize buses vapeur 12 régulièrement espacées sont insérés dans la lumière de la gouttière 11, pour la pulvérisation de la vapeur d'eau. La figure 4 montre un mode de réalisation du ramollisseur selon l'invention dans lequel le fond de la gouttière 11 a été retirée pour pouvoir visualiser un chauffe-eau 13 qui est positionnée pour pouvoir être plaqué sur les parois externes du fond de la gouttière. Le chauffe-eau 13 est branché sur une unité de distribution de vapeur 14 d'au plus 2 m de long (voir les figures 6, 7 et 8) comportant : une canalisation de sortie 15 composée d'un tube longitudinal 16 s'étendant sous la gouttière 11 ; des canaux de distribution 17 raccordés au tube longitudinal 16 ; et les seize buses vapeur 12. Les canaux de distribution 17 traversent des orifices 18 ménagés dans le fond de la gouttière 11 et sont branchés sur chaque buse vapeur 12 (voir les figures 8 et 10).

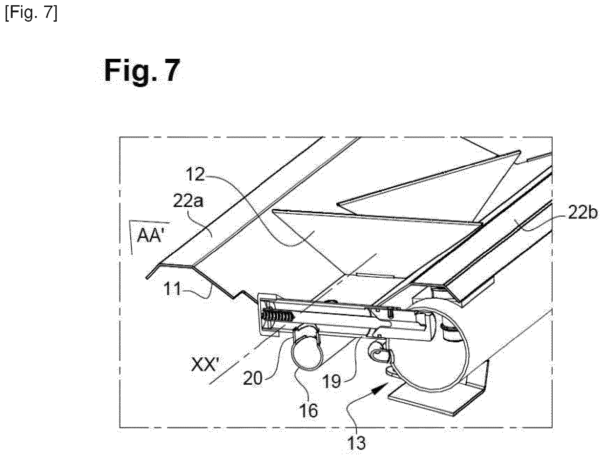

L'unité de distribution de vapeur 14 comprend une soupape d'admission 19 raccordée sur le tube longitudinal 16 de la canalisation de sortie 15 en son milieu par un canal de distribution d'admission 20 plus large que les autres canaux de distribution 17 branchés sur les buses vapeur 12. La soupape d'admission 19 est raccordée au chauffe-eau 13, comme cela est montré la figure 7. La gouttière 11 comprend un évidement 21 (voir la figure 10) ménagé en son milieu pour l'insertion de la soupape d'admission 19. Les bords latéraux de la gouttière 11 se prolongent par deux rails 22a et 22b qui constituent des moyens supports destinés à recevoir un tapis de convoyage. Dans un mode de réalisation, le ramollisseur 1 comprend le tapis de convoyage composé d'un filet en plastique alimentaire composé d'une toile tissée avec une maille carrée dont la longueur interne des côtés est de 1 mm et qui est faite avec un fil de 0,5 mm d'épaisseur.

Les bouches d'évacuation 23 des buses vapeur 12 sont positionnées à une distance de 2 mm du tapis de convoyage. Cette configuration permet de projeter la vapeur d'eau à une température de 99°C directement au contact des galettes qui sont convoyées sur le filet en plastique. La soupape d'admission 19 est réglée pour s'ouvrir lorsque la pression atteint 2 bars dans le chauffe-eau 13, la vapeur d'eau qui sort à une chaleur de 99°C traverse l'unité de distribution de vapeur 14 pour venir déboucher par les bouches d'évacuation des buses vapeur 12. Les buses vapeur 12 sont montées pivotantes sur la canalisation de sortie 15. De la sorte, les buses vapeur 12 sont orientables sous le tapis de convoyage pour pouvoir diffuser la vapeur sur une largeur choisie en fonction des dimensions des galette. Les buses vapeur 12 sont conformées en forme de pinceaux s'évasant sensiblement sur un plan et dont l'extrémité est ajourée par des orifices qui sont les bouches d'évacuation 23 régulièrement réparties sur toute la bordure distale de la buse vapeur.

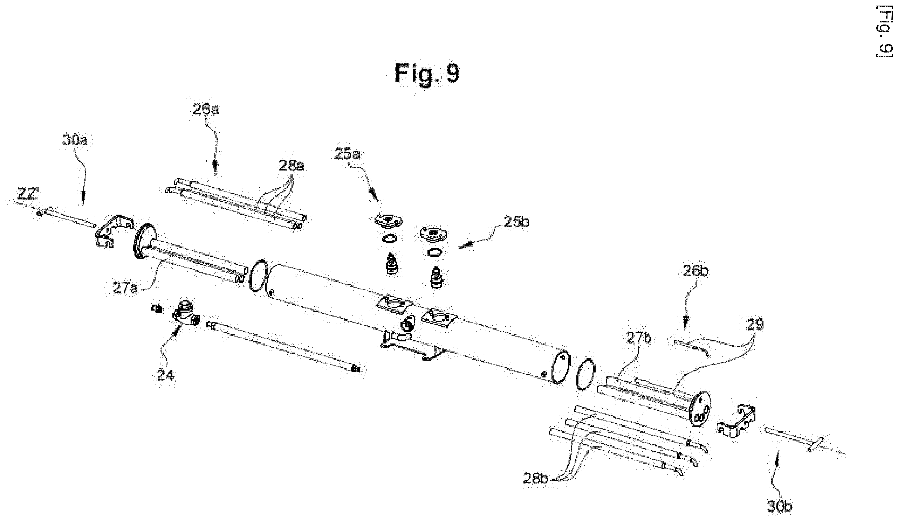

La figure 9 montre une vue en éclaté du chauffe-eau 13 s'étendant sur un axe longitudinal « ZZ' », qui doit être installé tel que l'axe « ZZ' » est sensiblement parallèle à l'axe « XX' ». Le chauffe-eau 13 comprend une vanne d'arrivée d'eau 24 et deux détecteurs de niveau d'eau mécanique 25a et 25b pour contrôler le niveau sur les résistances chauffantes, deux corps de chauffes 26a et 26b intégrant leur carters 27a et 27b et leur trois résistances 28a et 28b. Un des deux corps de chauffe 26b intègre également une anode sacrificielle 29. Le chauffe-eau 13 intègre également des poignées 30a et 30b pour le démontage des corps de chauffe 26a et 26b.

Le ramollisseur comporte également un capot 31 relevable qui s'étire axialement suivant un axe « YY' » parallèle à l'axe « XX' ». Un tel capot 31 permet que la vapeur reste bien confinée dans l'enceinte sans déperdition d'énergie thermique.

Le ramollisseur comporte également une cheminée d'évacuation de la vapeur 32 placée en amont du banc d'humectation.

En contrôlant finement la température et la pression dans le chauffe-eau 13, avec une vapeur d'eau projetée au plus près des galettes par le dessous du tapis de convoyage par les bouches d'évacuation 23 des buses, et en réglant convenablement la vitesse de défilement du tapis de convoyage, les galettes ne collent pas sur le tapis et la consommation électrique est fortement diminuée comparativement aux systèmes intégrant de simples jets de vapeur déjà connus.

Les galettes de riz défilent, depuis leur sortie du système de pulvérisation d'eau 5, sur le tapis de convoyage au dessus de l'unité de distribution de vapeur 14 comprenant les seize buses vapeur 12 régulièrement espacées. Les inventeurs ont pu constater qu'à chaque passage au dessus d'une buse vapeur 12, chacune des galettes reçoit une certaine quantité d'eau qui migre par capillarité progressivement dans toute l'épaisseur de la galette.

## Revendications

1. Ramollisseur (1) comprenant une enceinte pour l'humidification de galettes de riz qui comprend :
- un banc d'humidification (4) comportant au moins un moyen support prévu pour le défilement d'un tapis convoyage, ledit banc d'humidification (4) comporte une gouttière (11) qui s'étire axialement suivant un axe longitudinal « XX' » et une unité de distribution de vapeur (14) contenant au moins une buse vapeur (12) dont la bouche d'évacuation (13) débouche dans la lumière de ladite gouttière (11) ; et
- un capot (31) qui s'étire axialement suivant un axe « YY' » parallèle à l'axe « XX' » ; et dans lequel
le ramollisseur selon l'invention comporte un tapis de convoyage comportant une nappe textile dont les bordures coopèrent avec le moyen support et la nappe textile est une toile tissée avec une maille de 0,8 à 1,2 mm et un fil de 0,45 à 0,55 mm d'épaisseur; les bouches d'évacuation (13) des buses vapeur (12) étant distantes de 1 à 5 mm de la nappe textile.

2. Ramollisseur (1) selon la revendication 1, dans lequel les moyen supports consistent en un ensemble de deux rails (22a) et (22b) qui jouxtent de part et d'autre les bordures de la gouttière (11) en s'étendant sensiblement sur toute sa longueur.

3. Ramollisseur (1) selon les revendications 1 à 2, dans lequel l'unité de distribution de vapeur (14) intègre une soupape d'admission (19) de la vapeur d'eau et une canalisation de sortie (15) raccordée, d'une part, à ladite soupape d'admission (19) et, d'autre part, à la susdite ou aux susdites buses vapeur (12).

4. Ramollisseur (1) selon la revendication 3, dans lequel les buses vapeur (12) sont montées pivotantes sur la canalisation de sortie (15).

5. Ramollisseur (1) selon l'une des revendications 3 à 4, dans lequel la canalisation de sortie (15) de l'unité de distribution de vapeur (14) est positionnée sur le fond de la gouttière (11), et, l'unité de distribution comprend dix à vingt buses vapeur (12) montées sur ladite canalisation de sortie (15) en étant régulièrement espacées.

6. Ramollisseur (1) selon l'une des revendications 1 à 5, dans lequel le banc d'humectation (4) comprend un chauffe-eau (13) positionné le long des parois de la gouttière (11) et raccordé à l'unité de distribution de vapeur d'eau (14).

7. Ramollisseur (1) selon l'une des revendications 1 à 6, dans lequel le capot (31) est relevable pour passer d'une position basculée dans laquelle le capot coiffe le susdit banc d'humidification (4), à une position relevée dans laquelle le capot libère l'accès à l'intérieur de la gouttière (11) du banc d'humidification.

8. Ramollisseur (1) selon l'une des revendications 1 à 7, dans lequel le ramollisseur comprend un système de pulvérisation d'eau (5) positionné en amont du banc d'humidification (4), ledit système de pulvérisation d'eau (5) comportant : une unité de commande, un détecteur de galette (10) relié à l'unité de commande, et deux buses d'entrée branchées (9a) et (9b) sur l'unité de commande qui sont adaptées pour pulvériser de l'eau de manière séquentielle.

## Patentansprüche

1. Aufweicher (1), umfassend ein Gehäuse zum Befeuchten von Reiswaffeln, das umfasst:
- eine Befeuchtungsbank (4), die mindestens ein Trägermittel, das für den Durchlauf eines Förderbandes vorgesehen ist, aufweist, wobei die Befeuchtungsbank (4) eine Rinne (11), die sich entlang einer Längsachse "XX‴ axial erstreckt, und eine Dampfverteilungseinheit (14), die mindestens eine Dampfdüse (12) enthält, deren Auslassöffnung (13) in den Schlitz der Rinne (11) mündet, aufweist; und
- eine Haube (31), die sich entlang einer Achse "YY‴ parallel zu der Achse "XX‴ axial erstreckt; und wobei
der erfindungsgemäße Aufweicher ein Förderband, das eine Textilbahn aufweist, deren Ränder mit dem Trägermittel zusammenwirken, umfasst und die Textilbahn ein gewebtes Tuch mit einer Maschenweite von 0,8 bis 1,2 mm und einem Faden mit einer Dicke von 0,45 bis 0,55 mm ist; wobei die Auslassöffnungen (13) der Dampfdüsen (12) von 1 bis 5 mm von der Textilbahn entfernt sind.

2. Aufweicher (1) nach Anspruch 1, wobei die Trägermittel aus einer Anordnung von zwei Schienen (22a) und (22b) bestehen, die auf beiden Seiten an die Ränder der Rinne (11) angrenzen und sich im Wesentlichen über ihre gesamte Länge erstrecken.

3. Aufweicher (1) nach den Ansprüchen 1 bis 2, wobei die Dampfverteilungseinheit (14) ein Einlassventil (19) für den Wasserdampf und eine Ausgangsleitung (15), die einerseits mit dem Einlassventil (19) und andererseits mit der oder den oben genannten Dampfdüsen (12) verbunden ist, integriert.

4. Aufweicher (1) nach Anspruch 3, wobei die Dampfdüsen (12) an der Ausgangsleitung (15) schwenkbar angebracht sind.

5. Aufweicher (1) nach einem der Ansprüche 3 bis 4, wobei die Ausgangsleitung (15) der Dampfverteilungseinheit (14) an dem Boden der Rinne (11) positioniert ist und die Verteilungseinheit zehn bis zwanzig Dampfdüsen (12), die an der Ausgangsleitung (15) regelmäßig beabstandet angebracht sind, umfasst.

6. Aufweicher (1) nach einem der Ansprüche 1 bis 5, wobei die Befeuchtungsbank (4) einen Wassererhitzer (13), der entlang der Wände der Rinne (11) positioniert und mit der Wasserdampfverteilungseinheit (14) verbunden ist, umfasst.

7. Aufweicher (1) nach einem der Ansprüche 1 bis 6, wobei die Haube (31) zum Passieren von einer gekippten Position, in der die Haube die oben genannte Befeuchtungsbank (4) bedeckt, in eine hochgeklappte Position, in der die Haube den Zugang zu dem Inneren der Rinne (11) der Befeuchtungsbank freigibt, hochklappbar ist.

8. Aufweicher (1) nach einem der Ansprüche 1 bis 7, wobei der Aufweicher ein Wassersprühsystem (5), das stromaufwärts der Befeuchtungsbank (4) positioniert ist, umfasst, wobei das Wassersprühsystem (5) aufweist: eine Steuereinheit, einen Waffelsensor (10), der an der Steuereinheit befestigt ist, und zwei Eintrittsdüsen (9a) und (9b), die an der Steuereinheit angeschlossen sind, die geeignet sind, Wasser sequentiell zu sprühen.

## Claims

1. Softener (1) comprising an enclosure for humidifying rice cakes, which comprises:
- a humidifying bench (4) having at least one support means provided for the passage of a conveyor belt, said humidifying bench (4) having a gutter (11) which stretches axially along a longitudinal axis "XX"' and a steam distribution unit (14) containing at least one steam nozzle (12), the discharge mouth (13) of which opens into the elongate hole of said gutter (11); and
- a cover (31) which stretches axially along an axis "YY'" in parallel with the axis "XX"'; and wherein
the softener according to the invention has a conveyor belt having a textile layer of which the edges interact with the support means and the textile layer is a woven fabric having a mesh of 0.8 to 1.2 mm and a wire of 0.45 to 0.55 mm thick; the discharge mouths (13) of the steam nozzles (12) being separated by 1 to 5 mm from the textile layer.

2. Softener (1) according to claim 1, wherein the support means consist of a set of two rails (22a) and (22b) which adjoin one another on either side of the edges of the gutter (11) by extending substantially over its entire length.

3. Softener (1) according to either claim 1 or claim 2, wherein the steam distribution unit (14) incorporates an intake valve (19) for the steam and an outlet channel (15) connected on one side to said intake valve (19) and on the other side to said steam nozzle(s) (12).

4. Softener (1) according to claim 3, wherein the steam nozzles (12) are pivotally mounted on the outlet channel (15).

5. Softener (1) according to either claim 3 or claim 4, wherein the outlet channel (15) of the steam distribution unit (14) is positioned on the bottom of the gutter (11) and the distribution unit comprises ten to twenty steam nozzles (12) mounted on said outlet channel (15) by being evenly spaced.

6. Softener (1) according to any of claims 1 to 5, wherein the humidifying bench (4) comprises a water heater (13) positioned along the walls of the gutter (11) and connected to the steam distribution unit (14).

7. Softener (1) according to any of claims 1 to 6, wherein the cover (31) is raisable in order to pass from a tilted position, in which the cover covers said humidifying bench (4), to a raised position, in which the cover releases access to the interior of the gutter (11) of the humidifying bench.

8. Softener (1) according to any of claims 1 to 7, wherein the softener comprises a water spraying system (5) positioned upstream of the humidifying bench (4), said water spraying system (5) comprising: a control unit, a cake detector (10) connected to the control unit, and two connected input nozzles (9a) and (9b) on the control unit which are adapted to spray water sequentially.
